# EUROPÄISCHE PATENTANMELDUNG

(11) **EP 2 816 503 A1**
(43) Veröffentlichungstag der Anmeldung: **24.12.2014**
(21) Anmeldenummer: 14170205.0
(22) Anmeldetag: 28.05.2014
(51) Int. Cl.: G06K 9/00, G06T 3/00, G06T 7/00

(54) **Verfahren und Vorrichtung zum Kalibrieren einer ersten und einer zweiten Kamera**

(30) Priorität: 20.06.2013 DE 102013211648
(71) Anmelder: Continental Automotive GmbH, 30165 Hannover (DE)
(72) Erfinder: von Rosenberg, Harald, 78126 Königsfeld (DE); Schröer, Frank, 81476 München (DE); Garschke, Thomas, 78250 Tengen (DE)

(57) **Zusammenfassung**

Ein Verfahren zum Kalibrieren einer ersten (115) und einer zweiten (116) Kamera, die jeweils an einem Kraftfahrzeug (100) vorgesehen sind, umfasst:
- Bereitstellen eines ersten Einzelbildes (101) der ersten Kamera (115) und eines zweiten Einzelbildes (102) der zweiten Kamera (116),
- Ermitteln von mindestens einem Bildelement (111), das jeweils in dem ersten (101) und in dem zweiten Einzelbild (102) vorhanden ist,
- Ermitteln einer Ausrichtung des Bildelements (111) in dem ersten Einzelbild (101) relativ zu dem Bildelement (111) in dem zweiten Einzelbild (102),
- Ermitteln einer relativen Position der ersten Kamera (115) zu der zweiten Kamera (116) in Abhängigkeit von der ermittelten Ausrichtung,
- Zusammenfügen des ersten Einzelbildes (101) und des zweiten Einzelbildes (102) zu einem zusammengesetzten Gesamtbild (109) einer Umgebung (110) des Kraftfahrzeugs (100) in Abhängigkeit der ermittelten relativen Position.

## Beschreibung

Die Erfindung betrifft ein Verfahren sowie eine korrespondierende Vorrichtung zum Kalibrieren einer ersten und einer zweiten Kamera, die jeweils an einem Kraftfahrzeug vorgesehen sind.

In Kraftfahrzeugen werden Systeme eingesetzt, die aus den Einzelbildern verschiedener Kameras, die an unterschiedlichen Orten des Kraftfahrzeugs montiert sind, ein Gesamtbild der Umgebung des Kraftfahrzeugs erstellen. Dieses Gesamtbild wird beispielsweise auf einer Anzeigevorrichtung des Kraftfahrzeugs angezeigt und für Rückfahrt- oder Einparkassistenzsysteme verwendet. Für eine gute Darstellung ohne Verzerrungen muss das System kalibriert werden. Beispielsweise werden die Kamerabilder manuell oder mittels externen Hilfsmitteln wie beispielsweise Markern auf dem Boden ausgerichtet und kalibriert. Beispielsweise werden je Kamera vier Bodenmarker verwendet, die in einer exakt bekannten geometrischen Ausrichtung bezüglich des zu kalibrierenden Kamerasystems angeordnet werden müssen.

Es ist wünschenswert, ein Verfahren anzugeben, das ein zuverlässiges Kalibrieren einer ersten und einer zweiten Kamera an einem Kraftfahrzeug ermöglicht. Zudem ist es wünschenswert, eine Vorrichtung anzugeben, die ein zuverlässiges Kalibrieren der ersten und der zweiten Kamera ermöglicht.

Die Erfindung zeichnet sich aus durch ein Verfahren zum Kalibrieren einer ersten und einer zweiten Kamera, die jeweils an einem Kraftfahrzeug vorgesehen sind. Die Erfindung zeichnet sich zudem durch eine Vorrichtung aus, die dazu ausgebildet ist, das Verfahren auszuführen.

Gemäß Ausführungsformen der Erfindung wird ein erstes Einzelbild der ersten Kamera bereitgestellt. Ein zweites Einzelbild der zweiten Kamera wird bereitgestellt. Mindestens ein Bildelement wird ermittelt, das jeweils in dem ersten und in dem zweiten Einzelbild vorhanden ist. Eine Ausrichtung des Bildelementes in dem ersten Einzelbild relativ zu dem Bildelement in dem zweiten Einzelbild wird ermittelt. Eine relative Position der ersten Kamera zu der zweiten Kamera wird in Abhängigkeit von der ermittelten Ausrichtung ermittelt. Das erste Einzelbild und das zweite Einzelbild werden zu einem zusammengesetzten Gesamtbild einer Umgebung des Kraftfahrzeugs in Abhängigkeit der ermittelten relativen Position zusammengefügt.

Es werden korrespondierende Bildelemente, beispielsweise korrespondierende Punkte und/oder Bildinhalte, in dem ersten Einzelbild und in dem zweiten Einzelbild erkannt und identifiziert. Es können ein gemeinsames Bildelement oder eine Mehrzahl von gemeinsamen Bildelementen in den jeweiligen Einzelbildern erkannt werden, die in den beiden Einzelbildern vorliegen. Die Bildelemente werden auch dann erkannt, wenn sie in den Einzelbildern in ihrer Orientierung unterschiedlich zueinander sind oder verzerrt sind. Eine Verzerrung kann beispielsweise im Randbereich und/oder Überlappungsbereich der Einzelbilder auftreten. Die Einzelbilder werden zu dem Gesamtbild zusammengefügt und können beispielsweise für ein sogenanntes Surround View System des Kraftfahrzeugs verwendet werden, beispielsweise für ein Top View System. Beispielsweise ist die erste Kamera eine Frontkamera und die zweite Kamera eine Seitenkamera.

Durch die Ermittlung des Bildelements, das in beiden Einzelbildern vorhanden ist, ist es möglich, die relative Position der Kameras zueinander zu ermitteln. Somit ist eine Kalibrierung der Kameras möglich. Das Zusammenfügen erfolgt dann unter Berücksichtigung der tatsächlichen Einbauposition der ersten Kamera und der tatsächlichen Einbauposition der zweiten Kamera beziehungsweise der relativen Position der beiden Kameras zueinander. Dadurch wird ein zusammenhängendes Gesamtbild mit glatten Übergängen zwischen den entzerrten und transformierten Einzelbildern ermöglicht. Durch die Ermittlung des Bildelementes ergibt sich ein direkter Anhaltspunkt für eine notwendige Bildtransformation, so dass die beiden Einzelbilder zu einem homogenen Gesamtbild zusammengesetzt werden.

Das Verfahren benötigt keine zusätzlichen Marker oder ähnliches zur Kalibrierung. Zudem ist das Verfahren nicht nur bei Einbau der Kameras beziehungsweise in einer Werkstadt durchführbar. Es ist möglich, das Verfahren während des Betriebs des Kraftfahrzeugs durchzuführen. Zudem ist es möglich, die Kameras nachträglich an dem Kraftfahrzeug anzubringen und dann einfach und zuverlässig zu kalibrieren. Zudem können die Kameras an zueinander stark unterschiedlichen Kraftfahrzeugen montiert werden, beispielsweise an unterschiedlich langen Lastkraftwägen.

Gemäß Ausführungsformen ist das Bildelement ein skaleninvariantes Bildelement. Insbesondere ist das Bildelement unempfindlich gegen eine perspektivische Verzerrung. Beispielsweise wird das Gesamtbild mittels der sogenannten SIFT-Methode (scale invariant feature transformation; skaleninvariante Merkmalstransformation) zusammengesetzt.

Gemäß weiteren Ausführungsformen umfasst das Ermitteln des Bildelementes ein Ermitteln des Bildelementes aus einer Mehrzahl von vorgegebenen Bildelementen. In dem ersten Einzelbild und in dem zweiten Einzelbild können jeweils bekannte Bildelemente identifiziert werden. Die vorgegebenen Bildelemente umfassen insbesondere Fahrbahnmarkierungen und/oder weitere Elemente, die in einer gewissen Häufigkeit auf Straßen vorkommen. Beispielsweise umfasst das vorgegebene Bildelement einen Zebrastreifen. Alternativ oder zusätzlich umfasst das vorgegebene Bildelement beispielsweise eine Haltelinie, insbesondere an einer Ampel und/oder einer Einmündung und/oder einem Verkehrszeichen. Alternativ oder zusätzlich umfasst das vorgegebene Bildelement beispielsweise einen Bahnübergang. Alternativ oder zusätzlich umfasst das vorgegebene Bildelement beispielsweise eine Bordsteinkante. Alternativ oder zusätzlich umfasst das vorgegebene Bildelement beispielsweise einen Gullydeckel. Alternativ oder zusätzlich umfasst das vorgegebene Bildelement beispielsweise eine Fahrbahnseitenmarkierung und/oder einen Fahrbahnmittelstreifen. Das Bildelement umfasst insbesondere ein Merkmal, das in den jeweiligen Einzelbildern sicher erkannt und zugeordnet werden kann.

Gemäß Ausführungsformen wird in dem gesamten Einzelbild das Bildelement ermittelt. Die globale Suche nach dem Bildelement, das jeweils in dem ersten und in dem zweiten Einzelbild vorhanden ist, jeweils in dem gesamten Einzelbild ist insbesondere bei einer Neumontage oder in der Endfertigung vorteilhaft.

Alternativ oder zusätzlich erfolgt die Ermittlung des Bildelementes in einem Überlappungsbereich. Der Überlappungsbereich ist ein Bereich, der sowohl in dem ersten Einzelbild als auch in dem zweiten Einzelbild vorhanden ist. Es wird nicht das gesamte Einzelbild nach dem Bildelement untersucht, sondern nur in dem bekannten Überlappungsbereich beziehungsweise den bekannten Überlappungsbereichen.

Gemäß Ausführungsformen werden die bekannten Überlappungsbereiche um einen vorgegebenen Toleranzbereich erweitert. Somit ist die Ermittlung des Bildelementes schnell und effektiv.

Gemäß Ausführungsformen wird das Verfahren durchgeführt, nachdem eine Veränderung der relativen Position der ersten Kamera zu der zweiten Kamera ermittelt wurde. Das Verfahren ist während des Betriebes des Kraftfahrzeugs durchführbar. Beispielsweise wird das Verfahren durchgeführt, um die erste und die zweite Kamera nach einem Hinderniskontakt neu zu kalibrieren. Durch den Hinderniskontakt wird die relative Position der ersten Kamera zu der zweiten Kamera beispielsweise verändert. Die Kalibrierung nach dem Hinderniskontakt wie beispielsweise Ast oder Baum erfolgt gemäß Ausführungsformen automatisch. Gemäß weiteren Ausführungsformen wird die Kalibrierung manuell gestartet. Insbesondere ist kein Prüfplatz mit externen Markern notwendig, um die Kameras nach einem Hinderniskontakt neu zu kalibrieren.

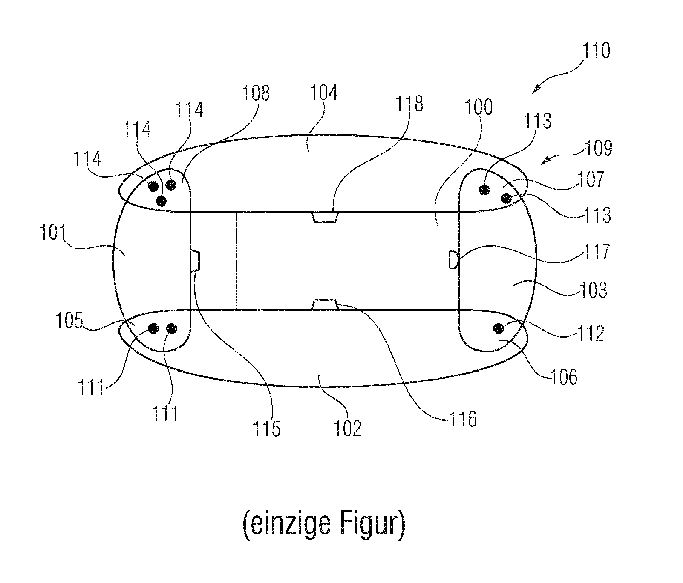

Weitere Merkmale, Vorteile und Weiterbildungen ergeben sich aus den nachfolgenden in Verbindung mit der Figur erläuterten Beispielen.

Die einzige Figur zeigt eine schematische Darstellung eines Kraftfahrzeugs gemäß Ausführungsformen.

Die Figur zeigt eine schematische Darstellung eines Kraftfahrzeugs 100 gemäß Ausführungsformen. Das Kraftfahrzeug 100 weist vier Kameras 115, 116, 117 und 118 auf. Gemäß weiteren Ausführungsformen sind weniger als vier Kameras angeordnet. Gemäß weiteren Ausführungsformen sind mehr als vier Kameras angeordnet. Die Kamera 115 ist gemäß dem Ausführungsbeispiel im Frontbereich des Kraftfahrzeugs 100 angeordnet. Die Kameras 116 und 118 sind jeweils auf einer Seite des Kraftfahrzeugs 100 angeordnet. Die Kamera 117 ist im Heckbereich des Kraftfahrzeugs 100 angeordnet. Die Kameras 115 bis 118 sind jeweils eingerichtet, Einzelbilder 101, 102 103 und 104 einer Umgebung 110 des Kraftfahrzeugs 100 aufzunehmen. Das Einzelbild 101 wird von der ersten Kamera 115 aufgezeichnet, das Einzelbild 102 wird von der zweiten Kamera 116 aufgenommen. Das Einzelbild 103 wird von der dritten Kamera 117 aufgezeichnet und das Einzelbild 104 wird von der vierten Kamera 118 aufgezeichnet.

Die Einzelbilder 101 bis 104 werden zu einem Gesamtbild 109 zusammengesetzt. Das Gesamtbild 109 wird beispielsweise für einen Nutzer des Kraftfahrzeugs 100 auf einer Anzeigevorrichtung dargestellt. Somit ist es möglich, für den Nutzer des Kraftfahrzeugs 100 die Umgebung 110 des Kraftfahrzeugs 100 aus beliebigen Perspektiven darzustellen. Beispielsweise werden die Einzelbilder 101 bis 104 mittels der sogenannten SIFT-Methode (scale invariant feature transformation) zusammengefügt, mit der korrespondierende Punkte und Bildinhalte in den jeweiligen Einzelbildern 101 bis 104 gefunden und identifiziert werden können.

Beispielsweise wird ein Bildelement 111 als gemeinsames Bildelement der Einzelbilder 101 und 102 identifiziert. Das Bildelement 111 ist sowohl in dem Einzelbild 101 als auch in dem Einzelbild 102 vorhanden. Insbesondere ist das Bildelement 111 in einem Überlappungsbereich 105 vorhanden. Der Überlappungsbereich 105 ist ein Bereich, der sowohl Teil des Einzelbildes 101 als auch Teil des Einzelbildes 102 ist. Da das Bildelement 111 von unterschiedlichen Kameras aus unterschiedlichen Perspektiven und gegebenenfalls unterschiedlichen Umweltbedingungen aufgenommen wurde, ist das Bildelement 111 in seiner Orientierung in den jeweiligen Einzelbildern 101 und 102 unterschiedlich und/oder verzerrt.

Vergleichbar wird gemäß Ausführungsformen ein weiteres Bildelement 112 in einem weiteren Überlappungsbereich 106 zwischen dem Einzelbild 102 und dem Einzelbild 103 erkannt. Gemäß weiteren Ausführungsformen wird ein weiteres Bildelement 113 in einem weiteren Überlappungsbereich 107 zwischen dem Einzelbild 103 und dem Einzelbild 104 erkannt. Gemäß weiteren Ausführungsformen wird ein weiteres Bildelement 114 in einem weiteren Überlappungsbereich 108 zwischen dem Einzelbild 104 und dem Einzelbild 101 erkannt.

Gemäß Ausführungsformen wird in jedem Überlappungsbereich 105 bis 108 jeweils ein einziges Bildelement 111 bis 114 ermittelt. Gemäß weiteren Ausführungsformen wird mehr als ein Bildelement 111 bis 114 je Überlappungsbereich 105 bis 108 ermittelt. Die Anzahl der ermittelten Bildelemente je Überlappungsbereich ist gemäß Ausführungsformen unterschiedlich zueinander.

Damit die Darstellung von Objekten, die in mehr als einem der Einzelbilder 101 bis 104 vorhanden sind, im zusammengefügten Gesamtbild naturgetreu und ohne Verzerrungen möglich ist, werden die Einzelbilder 101 bis 104 in Abhängigkeit der relativen Position der Kamera 115 bis 118 zueinander zusammengefügt. Somit ist es beispielsweise möglich, eine gerade Fahrbahnmarkierung, die sowohl im Einzelbild 101 als auch im Einzelbild 102 vorhanden ist, im Gesamtbild als gerade Linie darzustellen. In den nicht transformierten Einzelbildern ist die gerade Fahrbahnmarkierung beispielsweise gekrümmt abgebildet. Um die relative Position der Kameras zueinander zu ermitteln wird die Ausrichtung des Bildelementes im Einzelbild 101 mit der Ausrichtung des Bildelementes 111 im Einzelbild 102 verglichen. Da das Bildelement im ersten Einzelbild 101 und im zweiten Einzelbild 102 eine Abbildung des gleichen tatsächlichen Merkmals ist, ergibt sich ein direkter Zusammenhang für die notwendige Bildtransformation beziehungsweise die Kalibrierung. Vergleichbar ergibt sich für alle Einzelbilder 101 bis 104 in Abhängigkeit der jeweiligen gemeinsamen Bildelemente 111 bis 114 ein direkter Zusammenhang für die notwendige Bildtransformation beziehungsweise die Kalibrierung.

Insbesondere werden als Bildelemente, die zur Kalibrierung verwendet werden, bekannte Bildelemente verwendet. Beispielsweise ist das Bildelement mindestens eines aus Zebrasteifen, Haltelinie, Bahnübergang, Bordsteinkante, Gullydeckel, Fahrbahnseitenmarkierung und/oder Fahrbahnmittelstreifen. Das Bildelement ist gemäß weiteren Ausführungsformen ein weiteres Merkmal, das sicher in dem Einzelbild erkennbar ist. Durch die Verwendung von bekannten Bildelementen ist eine zuverlässige Kalibrierung möglich, da eine gewünschte Darstellung im Gesamtbild für bekannte Bildelemente ebenfalls bekannt ist.

Die Kalibrierung für das Zusammenfügen des Gesamtbilds 109 erfolgt gemäß Ausführungsformen nach dem Einbau beziehungsweise der Montage der Kameras 115 bis 118. Insbesondere zur ersten Kalibrierung wird das Bildelement 111 beziehungsweise die Bildelemente 112 bis 114 jeweils im gesamten Bereich der jeweiligen Einzelbilder 101 bis 104 ermittelt. Die gesamten Einzelbilder 101 bis 104 werden jeweils nach Bildelementen untersucht, die auch in zumindest einem weiteren der Einzelbilder 101 bis 104 vorhanden sind. Die Suche im gesamten Bereich der Einzelbilder 101 bis 104 ist zwar rechenintensiv, ermöglicht aber eine sehr zuverlässige Kalibrierung.

Gemäß weiteren Ausführungsformen werden die Bildelemente 111 bis 114 alternativ oder zusätzlich nur in den Überlappungsbereichen 105 bis 108 gesucht. Es wird nicht mehr jeweils in den ganzen Einzelbildern 104 bis 105 nach gemeinsamen Bildelementen gesucht, sondern nur in den bereits bekannten Überlappungsbereichen 105 bis 108. Gemäß Ausführungsformen wird zusätzlich in einem vorgegebenen Toleranzbereich um die Überlappungsbereiche 105 bis 108 nach gemeinsamen Bildelementen gesucht. Somit ist das Verfahren im Vergleich zur Suche im gesamten Bild schneller. Die Suche in den Überlappungsbereichen 105 bis 108 bietet sich insbesondere an, wenn das Verfahren während des Betriebs des Kraftfahrzeugs nach einer Veränderung der relativen Position der Kameras zueinander durchgeführt wird. Die relative Position der Kameras 115 bis 118 zueinander ändert sich beispielsweise nach einem Hinderniskontakt wie Ast oder Baum, bei dem die Kamerahalterung verbogen wird.

Das Verfahren zum Kalibrieren der Kameras 115 bis 118 mittels der gemeinsamen Bildelemente 111 bis 114 ist ohne externe Marker durchführbar. Somit ist es möglich, die Kameras 115 bis 118 und das Zusammenfügen der Einzelbilder 101 bis 104 zu dem Gesamtbild 109 stets so zu kalibrieren, dass verlässlich eine zusammenhängende Darstellung des Gesamtbildes 109 mit glatten Übergängen zwischen den entzerrten und transformierten Einzelbildern 101 bis 104 entsteht.

## Patentansprüche

1. Verfahren zum Kalibrieren einer ersten (115) und einer zweiten (116) Kamera, die jeweils an einem Kraftfahrzeug (100) vorgesehen sind, umfassend:
- Bereitstellen eines ersten Einzelbildes (101) der ersten Kamera (115) und eines zweiten Einzelbildes (102) der zweiten Kamera (116),
- Ermitteln von mindestens einem Bildelement (111), das jeweils in dem ersten (101) und in dem zweiten Einzelbild (102) vorhanden ist,
- Ermitteln einer Ausrichtung des Bildelements (111) in dem ersten Einzelbild (101) relativ zu dem Bildelement (111) in dem zweiten Einzelbild (102),
- Ermitteln einer relativen Position der ersten Kamera (115) zu der zweiten Kamera (116) in Abhängigkeit von der ermittelten Ausrichtung,
- Zusammenfügen des ersten Einzelbildes (101) und des zweiten Einzelbildes (102) zu einem zusammengesetzten Gesamtbild (109) einer Umgebung (110) des Kraftfahrzeugs (100) in Abhängigkeit der ermittelten relativen Position.

2. Verfahren nach Anspruch 1, bei dem das Ermitteln des mindestens einen Bildelementes (111) umfasst:
- Ermitteln von mindestens einem skaleninvarianten Bildelement (111).

3. Verfahren nach Anspruch 1 oder 2, bei dem das Ermitteln des mindestens einen Bildelementes (111) umfasst:
- Ermitteln des Bildelementes (111) aus einer Mehrzahl von vorgegebenen Bildelementen.

4. Verfahren nach einem der Ansprüche 1 bis 3, bei dem das vorgegebene Bildelement eines ist aus:
- Zebrastreifen,
- Haltelinie,
- Bahnübergang,
- Bordsteinkante,
- Gullydeckel,
- Fahrbahnseitenmarkierung,
- Fahrbahnmittelstreifen.

5. Verfahren nach einem der Ansprüche 1 bis 4, wobei das erste (101) und das zweite (102) Einzelbild einen gemeinsamen Überlappungsbereich (105) aufweisen, umfassend:
- Ermitteln des mindestens einen Bildelementes (111) in dem Überlappungsbereich (105).

6. Verfahren nach einem der Ansprüche 1 bis 5,
- Ermitteln der Ausrichtung des Bildelementes (111) in dem ersten Einzelbild (101) zu dem Bildelement (111) in dem zweiten Einzelbild (102) nachdem eine Veränderung der relativen Position der ersten Kamera (1115) zu der zweiten Kamera (116) ermittelt wurde.

7. Vorrichtung zum Kalibrieren einer ersten und einer zweiten Kamera, die jeweils an einem Kraftfahrzeug vorgesehen sind, die eingerichtet ist zum:
- Bereitstellen eines ersten Einzelbildes (101) der ersten Kamera (115) und eines zweiten Einzelbildes (102) der zweiten Kamera (116),
- Ermitteln von mindestens einem Bildelement (111), das jeweils in dem ersten (101) und in dem zweiten Einzelbild (102) vorhanden ist,
- Ermitteln einer Ausrichtung des Bildelementes (111) in dem ersten Einzelbild (101) relativ zu dem Bildelement (111) in dem zweiten Einzelbild (102),
- Ermitteln einer relativen Position der ersten Kamera (115) zu der zweiten Kamera (116) in Abhängigkeit von der ermittelten Ausrichtung,
- Zusammenfügen des ersten Einzelbildes (101) und des zweiten Einzelbilds (102) zu einem zusammengesetzten Gesamtbild (109) einer Umgebung (110) des Kraftfahrzeugs (100) in Abhängigkeit der ermittelten relativen Position.
